(19) Europäisches Patentamt / European Patent Office / Office européen des brevets

(11) **EP 1 865 112 A1**

(12) **EUROPEAN PATENT APPLICATION**
published in accordance with Art. 158(3) EPC

(43) Date of publication:
**12.12.2007 Bulletin 2007/50**

(51) Int Cl.:
**E02B 3/10** *(2006.01)*

(21) Application number: **05825317.0**

(22) Date of filing: **02.12.2005**

(86) International application number:
**PCT/ES2005/070169**

(87) International publication number:
**WO 2006/067256 (29.06.2006 Gazette 2006/26)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.12.2004 ES 200403058**

(71) Applicant: **Universidad de Granada
18071 Granada (ES)**

(72) Inventor: **LOSADA RODRÍGUEZ, Miguel Ángel
E-18071 Granada (ES)**

(74) Representative: **Elzaburu Marquez, Alberto Elzaburu
Miguel Angel, 21
28010 Madrid (ES)**

(54) **MOUND BREAKWATER HAVING A GEOMETRY THAT PROVIDES MAXIMUM STABILITY**

(57)    The invention relates to a mound breakwater which is used to protect maritime, fluvial and lacustrine structures as well as structures at water-collecting areas, the main mantle of which comprises three regions, namely: a first lower region or the foot of the mound (10), against which the surge washes and is reflected; a second central dissipating region (11) at which the surge breaks and energy is dissipated owing to the breaking of the surge, mainly in the form of plunging waves; and a third upper oscillation region (12) at which the flux oscillates freely as a result of the broken wave. The natural or artificial elements that form the main mantle of the mound are positioned in layers along two main lines with angles (a, b) that vary with the water lever (2) along the profile of the main mantle of the breakwater.

FIGURE 2

**Description**

**FIELD OF THE INVENTION**

This invention relates to a structural composition with geometry of maximum stability of a rubble-mound breakwater for maritime and port works for protecting coastline shores, riverbanks, dams and other bodies of water from the action of waves and other surges of the sea.

**BACKGROUND OF THE INVENTION**

In certain port and coastline areas, due to the action of the waves and other surges of the free surface of the sea, it is necessary to use linear works with a constant grading, called rubble-mound breakwaters. These are works having a granular constitution, stratified in layers, the main purpose of which is to protect the port or coastline area from the action of marine dynamics, thus maintaining the necessary requirements of safety, service, use and exploitation thereof. It is common to build them with slopes the gradient of which is in the range of 1:1.5 to 1:2, the construction with slopes with less gradient being less frequent, and the slope rarely exceeds 1:3.

An essential part of the structural composition of rubble-mound breakwaters is the so-called armor layer, which is the layer that must resist the actions of the sea. It is built with natural (rock-fill) or artificial elements of mass concrete, for example concrete blocks or parallelepiped shapes, having high qualities of robustness, with good mechanical performance against external forces and against internal stressing created by the same, and high qualities of hydraulic stability as a result of the ability of the elements on one hand to be anchored on surfaces underlying the works to be protected, and on the other hand to be fixed to one another, forming a protective structure leaving enough gaps so as to absorb and dissipate the hydraulic energy to which the work is subjected. It is common to build the armor layer with two or three layers of elements or pieces. For some recently patented parts, the construction of the armor layer is proposed with "somewhat more than one layer". Spanish experience with natural or artificial (block or parallelepiped shapes) stone elements is to build the armor layer with two layers. The inner layers are built with a two-layer format with individual dimensions of its elements being sufficient to meet the filter criterion between layers. This format is maintained until reaching the core, which is built with a "quarry run".

Nevertheless, when the action of the sea, mainly the waves, exceeds a certain energy threshold, the elements of the armor layer begin to pitch in their position, to hit against adjacent elements, or are extracted and displaced from their original position causing substantial changes in the slope of the breakwater, as well as causing the deterioration, wear and even breaking of the elements. Furthermore, in slender pieces currently known, for example tetrapods, acropods, dolosse, etc., the interlocking between the elements can cause tractions and failure of the material, making the breakwater either too impermeable and of a tensile or explosive failure with known pieces of the acropod type, or too permeable, so the block breathes and these known pieces, such as dolosse, core-lock, etc., break.

The extraction or breaking of pieces of the layer extends along the slope around the middle level, substantially modifying the original slope, and inwardly until the elements of the secondary layer are exposed to the direct action of the waves. It can then be said that the failure has reached the destruction level according to the known theories of Iribarren, R., 1965, and Losada, M.A., 1990, concerning the performance and calculation of a rubble-mound breakwater.

The problem of known structures in the prior art is the difficulty of limiting their performance and suitably evaluating their structural response to the action of the waves. For different reasons, among them the incorrect scaling of the flow inside the breakwater, this problem cannot be solved by means of wave channel experimenting. Therefore, work projects located in the same location propose rubble-mound breakwaters with dimensions of its different elements involving different construction costs and very different maintenance and reconstruction costs of said structures. Furthermore, the latter are difficult to predict due to the heterogeneity of their structural response.

The present invention resolves these drawbacks, developing a structure of the armor layer of a rubble-mound breakwater for maritime and port works and for works protecting coastline shores, riverbanks, dams and other bodies of water with a geometry of maximum stability for each type of structural unit forming the previous layer and design waves, with unalterable construction costs and with no maintenance or reconstruction costs, as will be described below.

**SUMMARY OF THE INVENTION**

The present invention proposes a design of the armor layer of a rubble-mound breakwater formed by either natural or artificial structural elements, such that the design of the geometry of the armor layer provides maximum stability to the structural part of the breakwater while at the same time minimizing construction, maintenance and repair costs thereof.

The present invention carries out the design of the structure of the armor layer of a rubble-mound breakwater according to three fundamental types of parameters:

1. the parameters defining *the work or structure* of the rubble-mound breakwater itself;
2. the parameters defining *the medium* in which the rubble-mound breakwater is going to be arranged; and
3. the parameters defining *the characteristics of the waves* to which the rubble-mound breakwater is going to be subjected.

Then, based on the parameters of the work, on the medium and on the waves, the invention determines the demands which would break a rubble-mound breakwater structure, thus quantifying the total stability of the breakwater, which is what will provide the design of the structural components of the armor layer thereof while at the same time optimizing the costs of the work. Other features and advantages of the present invention will be understood from the following detailed description of an illustrative embodiment of its object in relation to the attached drawings.

**DESCRIPTION OF THE DRAWINGS**

Figure 1 schematically shows a cross-section view of a conventional rubble-mound breakwater.
Figure 2 shows the three configuration sections of the armor layer of a rubble-mound breakwater according to the invention.
Figure 3 shows the variation of the geometry of the profile of the armor layer of a rubble-mound breakwater according to the invention according to the wave height and depth at the base of the breakwater.
Figure 4 shows the maximum horizontal displacement of the central region of the armor layer of a rubble-mound breakwater according to the invention according to the wave height and depth at the base of the breakwater.
Figure 5 shows the maximum horizontal displacement of the lower region or the toe of slope of the armor layer of a rubble-mound breakwater according to the invention according to the wave height and depth at the base of the breakwater.
Figure 6 shows the maximum angular deviation of the regions of the armor layer of a rubble-mound breakwater according to the invention according to the wave height and depth at the base of the breakwater.

**DETAILED DESCRIPTION OF THE INVENTION**

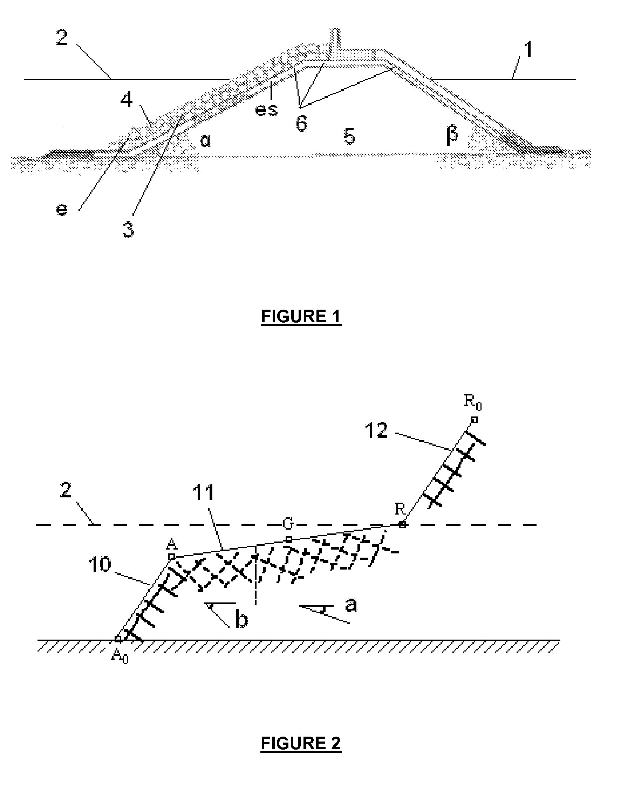

As shown in Figure 1, a conventional rubble-mound breakwater with a stratified layer structure protecting a port or coastline area 1 from the waves of the maritime or river area 2 consists of a structural component or armor layer 3, the purpose of which is to resist the action of the waves of area 2, formed by natural or artificial stones 4; a central core 5 acting as a support to the structure of the breakwater, formed by smaller stones (not shown) than the stones 4 forming the armor layer 3; and secondary layers 6, the purpose of which is to provide support to the armor layer 3, providing friction to the assembly while at the same time acting as a transition between the stones 4 of the armor layer 3 and the core 5, such that the filter condition between adjacent layers is met.
The design of the armor layer 3 of the rubble-mound breakwater according to the present invention is carried out according to three fundamental types of parameters: work or structure parameters, medium parameters and wave parameters.
The parameters defining *the work or structure* of the rubble-mound breakwater are as follows:

- the type of elements 4 of the armor layer 3;
- the manner of arranging the elements 4 of the armor layer 3;
- the angle $\alpha$ of the slope with the horizontal;
- the weight W of the stones 4 of the armor layer 3;
- the specific weight $\gamma_r$ of the stones 4 of the armor layer 3;
- the thickness t of the armor layer 3;
- the crest level 7 of the armor layer 3;
- the crest width 8 of the armor layer 3;
- the weight of the stones of the secondary layers 6;
- particle size interval of the secondary elements 6;
- the thickness $t_s$ of the secondary layers 6; and
- the porosity and particle size interval of the elements of the core 5.

The roughness and permeability characteristics of the armor layer 3 depend on the type of stones 4 forming it, on the manner of arranging them on the slope, and on their size.
The parameters defining *the medium* in which the rubble-mound breakwater is arranged are as follows:

- the depth h of the water at the base of the breakwater;
- the angle $\beta$ defining the gradient of the bottom, normal to the alignment of the breakwater;
- the specific weight $\gamma_w$ of the water;
- the dynamic viscosity $\mu$ of the water; and
- the acceleration g due to gravity.

The parameters determining *the characteristics of the waves* to which the rubble-mound breakwater is subjected are as follows:

- incident wave height $H_i$ and period T;
- reflected wave height $H_r$ and period T;
- incident wave angle of approach $\theta_i$;
- reflected wave angle of departure $\theta_r$;
- the phase difference $\varepsilon$ between incident and reflected waves.

The ratio between the incident and reflected wave heights is the reflection coefficient. This and the phase difference depend on the type of the rubble-mound breakwater and are relevant elements of the design.

The project criteria for rubble-mound breakwaters with natural or artificial elements which are currently applied are summarized below:

Geometry: constant gradient
Damage criterion: onset of breaking with no significant movements of pieces
Weight of secondary layers: geotechnical filter criterion
Core size: quarry run
Artificial element of the armor layer: shape and material
Calculated sole weight of the artificial element: stability formula
Arrangement of the elements: random
Number of layers in the armor layer: two
Some elements with particular shapes, especially acropods and core-lock, which are currently known, have an associated arrangement criterion and a number of layers of the armor layer.

In countries or regions such as Alaska and Greenland, breakwaters are built with an armor layer made of natural stones called berm breakwaters. The previous criteria are modified proposing: variable slope, weight of the elements of the armor layer defined by means of a particle size curve and significant movement of the pieces is allowed along the profile. This type of breakwater undergoes significant deterioration of the natural pieces, therefore they must be frequently repaired.

In Spain, natural stone blocks or parallelepiped shapes of mass concrete are traditionally used for the armor layer of a rubble-mound breakwater, although it is also frequent to build with other shapes of pieces, tetrapods, dolosse, acropods, etc. The variables affecting the stability of a rubble-mound breakwater are summarized in Table 1:

| Characteristics of the medium | | h, $\beta$, $\gamma_w$, $\mu$, g |
|---|---|---|
| Characteristics of the waves | Incident | $H_i$, T, $\theta_i$ |
| | Reflected | $H_r$, T, $\theta_r$, $\varepsilon$ |
| Characteristics of the structure | | $\alpha$, W, $\gamma_r$<br>Friction and interlocking between pieces<br>Permeability and roughness of the layer<br>Characteristics of the lower layers |

### TABLE 1

With these project criteria and having determined the project waves defined by a typical height $H_i$ and period T, a formula is usually applied which provides the weight W of the elements of the armor layer and which has the following functional structure of dimensionless monomials:

$$W = \gamma_r \frac{S_r H_i^3}{(S_r - 1)^3} \Psi(\alpha, \theta_i, R, I_r)$$

$$R = \frac{H_r}{H_i} e^{i\varepsilon}$$

$$I_r = \frac{\tan \alpha}{\sqrt{\dfrac{H_i}{L}}}$$

where L is the wavelength (depending on period T and on the depth h at which the breakwater is built), R is the reflection coefficient of the breakwater (depending on the slope, the characteristics of the layers and the relative depth and wave angle of incidence), $I_r$ is the so-called Iribarren number and $\psi$ is the stability function.

The critical stability conditions of a rubble-mound breakwater correspond with waves breaking in the plunging-collapsing-surging range represented by an Iribarren number interval of $(2.3 < I_r < 4)$ and a reflection coefficient modulus in the interval of $(0.25 < R < 0.60)$. The values of the stability function are obtained by means of full scale tests in a wave channel.

This working technique has two important drawbacks. On one hand, the experimental results show considerable dispersion, being able to obtain in two tests for the same breakwater and for the same characteristics of the incident waves weight values of the element in which one doubles the other. On the other hand, the incorrect representation of the performance of the breakwater against the waves when scaling the test with the Froude number, mainly affecting the permeability of the different layers of the breakwater, considerably alters the division of the energy of the waves with respect to that of the prototype. Experimental data from many years of experiments in laboratories worldwide show that two identical experiments do not provide the same experimental results. In other words, the stability test for a rubble-mound breakwater does not meet one of the essential requirements for validating an experimental technique: reproducibility thereof.

These experimental difficulties currently result in a great variability of the dimensions of rubble-mound breakwaters, mainly the weight W of the elements 4 of the armor layer 3, with considerable consequences and variations in construction and maintenance costs and the lack of foreseeing repair costs in the useful life of the work.

The present invention solves the problem of variability of the dimensions of the rubble-mound breakwater insofar as it defines the geometry of the profile, the weight and the manner of arranging the elements 4 of the armor layer 3 and remaining layers 6, providing maximum stability, in fact absolute stability for the design waves and all those under them, reducing construction cost and not requiring maintenance or repair costs. The concept of absolute stability means that neither the design waves nor any other wave under them can cause significant variations in the project profile affecting its overall performance or significant movements of the pieces 4 of the armor layer 3 affecting its stability.

The invention carries out the design of the geometry of the slope for different types of elements 4 of the armor layer 3, defines the system of arranging them once the project parameters are selected and a weight W of the element 4 is chosen, such that the breakwater has maximum stability while at the same time optimizing costs of the work, which costs consist exclusively of the construction costs.

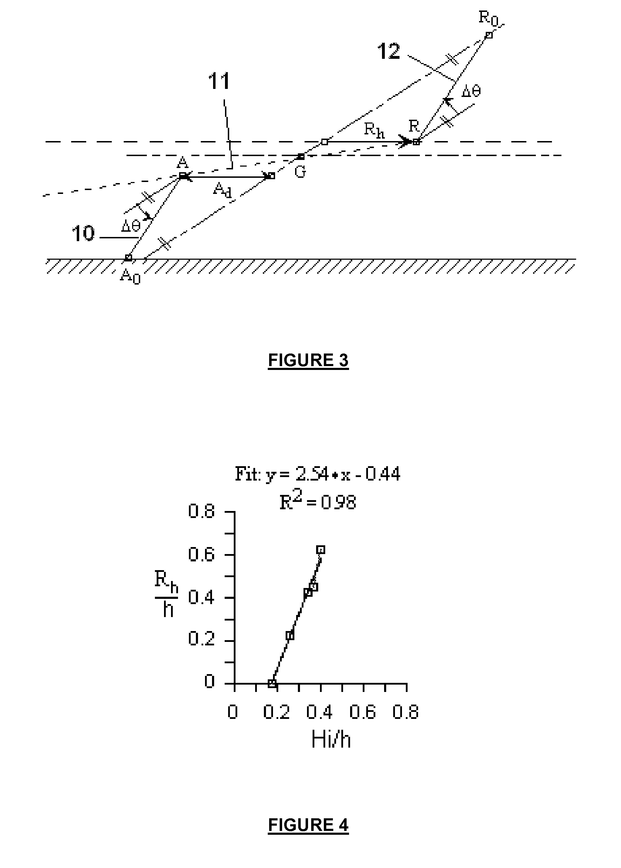

The geometric profile of the invention is formed by three consecutive regions which, from the sea floor to the surfaced region, as shown in Figure 3, are: lower or toe of slope region 10, between points $A_0$ and A, central or dissipating region 11 between points A and R, with G as a central point, and upper or surge region 12, comprised between R and $R_0$. The toe of slope region 10 acts only as a finish for the profile until reaching the floor, it has a gradient close to the natural slope, about 1:1.3, of the elements forming it and the incident wave is reflected therein. In the central or dissipating region 11, the plunging of the incident wave occurs because its average gradient is small, about 1:5. Finally, the upper or surge region 12 is reached only by the waves that have broken in the central region 11 and cause a guided up and down movement of the water flow as a result of its sloping face close to the gradient of 1:0.75. The intersection between the three regions 10, 11 and 12 can be in a sharp edge or an adjustment curve, this not being a relevant aspect in the performance of the breakwater.

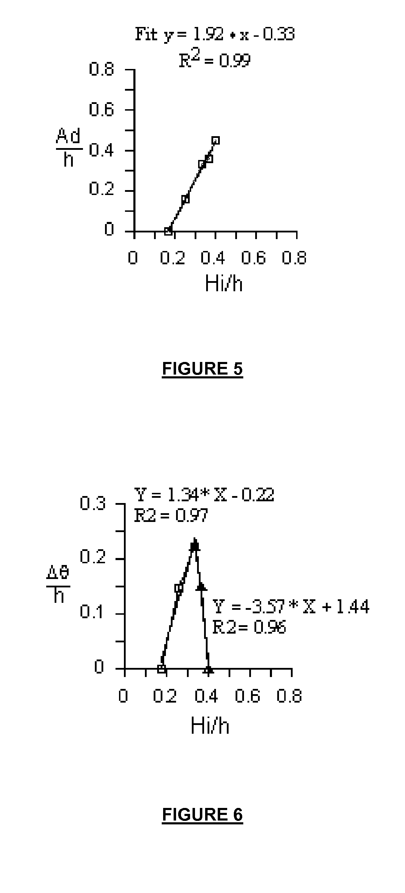

As shown in Figure 4, taking as a plane of reference slope with a constant gradient, for example 1:1.5 or 1:2, the maximum horizontal displacements $A_d$ and $R_h$ with respect to h, depth of the water at the base of the breakwater, for maintaining the equilibrium profile of the horizontal region 10 and central region 11 depend linearly on the design wave height $H_i$, as do the maximum angular deviations for the equilibrium profile $\Delta\theta$ which is formed by the different regions with the horizontal plane, as can be seen in Figures 5, 6 and 7. The reference slope is not relevant in the final result given that the geometric profile of maximum stability does not depend on the initial conditions, as has been experimentally found according to the invention. By making the magnitudes defining the geometry of the profile dimensionless with the wave height $H_i$, all the profiles of maximum stability obtained for increasing wave heights $H_i$ are geometrically similar, i.e. they have a geometric similarity.

This is the profile that a breakwater with elements 4 that are all the same will adopt when it is subjected to the action of the design waves. It is the response provided by the natural medium when it is left to act freely with no restrictions, acting as a self-organized system. Therefore, when the same test is repeated twice exactly the same geometric profile is obtained in both, with no deviations. When the design waves are selected and a type of element 4 and its weight W are chosen, its profile of geometric similarity does not depend on the initial condition and it only depends on the wave height $H_i$.

The elements 4 of the armor layer 3 must be arranged forming a grid with two main lines, the angles a and b of which are about 35° and 55° at the beginning of the dissipating region 11 and which turn until reaching the surge region 12 with main lines with angles a and b of about 55° and 35° preferably, the value of which depends on the type of piece 4 forming the armor layer 3. In the case of elements 4 that are not parallelepiped shapes, angles a and b are defined according to their main dimension, which is the largest one out of the three axes of the imaginary ellipsoid enveloping said element 4. When the pieces 4 are blocks or parallelepiped shapes, it is enough to arrange two elements 4 in alignment. When the pieces 4 are rock-fill, it is advisable to arrange three pieces 4 in alignment except when the stone can be cut and given a block shape.

The secondary layer 6 under the armor layer 3 must carry out with three functions, two of which are known in the state of the art and a specific third function of the invention. The first two functions are geotechnical filtering and friction surface of the armor layer 3. Therefore, the size of the pieces 4 is determined according to the standards of use in maritime engineering. The third function is to provide a suitable support surface so that the pieces 4 of the armor layer 3 can be arranged with the indicated alignments, a and b. This is specified simply by the "casting" of the armor layer 3 for each type of element 4. The following layers 6 and core 5 carry out only the function of supporting the secondary layer 6 and armor layer 3, meeting the filter condition, preferably arranging a geofabric according to the invention. They can be of any type of material and size meeting the conditions of durability, even quarry blast surplus and other construction materials.

The main hydrodynamic characteristics and process of the invention are as follows:

*Division of the energy:* the geometric profile of maximum stability optimizes the distribution of the incident energy, maximizing the energy dissipated by plunging breakers, minimizing the energy flows reflected and transmitted through the breakwater. The division of energy furthermore occurs on a staggered basis along the profile of the armor layer 3: reflection in the slope of toe region 10; dissipation in the central region 11. The "armoring" of the profile 3 of the breakwater by means of arranging the elements 4 as proposed in the invention minimizes the energy flow transmitted by the profile 3 through the breakwater towards the inner part of the protected area.

*Armoring of the layer.* The self-organized profile of the invention has a grid structure, the pieces 4 being oriented in planes assuring maximum resistance to extraction. This armoring of section 3 occurs in both directions, towards land and towards the sea, as can be seen in Figure 3. This system of arranging causes the overlapping of the pieces 4 of the armor layer 3, having surfaces with a slope a and b opposing the maximum upward and downward flow velocities. As previously stated, this armoring aids in minimizing agitation of the breakwater in the lower level of the sea.

*Overflow control.* The upper or surge region controls the upwards and downwards flow of the wave once it has broken and minimizes overflow by the crest of the breakwater by channeling the flow along a slope that is more rigid than a traditional one and providing friction against the film of water both in the upward and downward movement and forcing it in the downward virtually free movement to change the direction of the flow when reaching the second region 11, loosing velocity due to the change in slope and encountering the opposite flow due to the following broken wave.

In summary, the present invention develops a type of rubble-mound breakwater for maritime, river and lacustrine works and works in dams with a geometric profile having three regions 10, 11 and 12 providing it with maximum stability, such that when the design waves are determined, the armor layer 3 of the breakwater is built with a type of elements 4, arranged with optimal angles a and b of the main lines so as to obtain the armoring of the slope and overlapping of elements 4 such that it is absolutely stable for all the waves of height $H_i$ that are equal to or less than the calculated one, this breakwater being characterized in that the construction cost is fixed, it does not allow constructive changes or design modifications, and it has no maintenance or repair or reconstruction costs. The section of the armor layer 3 can preferably be constructed with two or more layers, being completed with a secondary layer 6 providing the armor layer 3 with anti-slipping roughness, this secondary layer 6 preferably continuing on the underside with a foundation material preferably protected by a geofabric carrying out the filter function.

Any modifications comprised within the scope defined by the following claims can be introduced in the preferred embodiment described above.

**Claims**

1. A rubble-mound breakwater with a slope angle ($\alpha$) and a terrain angle ($\beta$), arranged in a medium with a specific weight $\gamma_w$ with an incident wave height ($H_i$), comprising an armor layer (3) comprising stones (4), secondary layers (6) and a core (5) for protecting maritime, river and lacustrine works and works in dams, **characterized in that** the mentioned armor layer (3) comprises three regions (10, 11 and 12), these regions being:

   - a first lower or toe of slope region (10), with a gradient of 1:1.5, where the waves bank and are reflected;
   - a second central or dissipating region (11), with a gradient of 1:5.3, where the waves break and the energy is dissipated by breaking, mainly plunging; and
   - a third upper or surge region (12) with a gradient of 1:0.75, where the free surging of the flow occurs due to the broken wave.

2. A rubble-mound breakwater according to claim 1, **characterized in that** the mentioned armor layer (3) comprises at least one layer of stones (4), said stones (4) being arranged forming a grid with two main lines of angles (a, b) corresponding to the alignment of the main dimension of said stones (4), (a, b) being 35° and 45°, respectively, at the beginning of the dissipating region (11), these stones (4) turning until reaching the surge region (12) where the angles (a, b) are 55° and 35°, respectively.

3. A rubble-mound breakwater according to claim 2, **characterized in that** the stones (4) of the armor layer (3) are of constant weight and various shapes.

**FIGURE 1**

**FIGURE 2**

**FIGURE 3**

Fit: $y = 2.54 * x - 0.44$

$R^2 = 0.98$

**FIGURE 4**

Fit $y = 1.92 * x - 0.33$

$R^2 = 0.99$

**FIGURE 5**

$Y = 1.34 * X - 0.22$
$R2 = 0.97$

$Y = -3.57 * X + 1.44$
$R2 = 0.96$

**FIGURE 6**

## INTERNATIONAL SEARCH REPORT

| | International application No. |
|---|---|
| | PCT/ ES 2005/070169 |

**A. CLASSIFICATION OF SUBJECT MATTER**

*E02B 3/10* (2006.01)

According to International Patent Classification (IPC) or to both national classification and IPC

**B. FIELDS SEARCHED**

Minimum documentation searched (classification system followed by classification symbols)

E02B3/,E02D17/

Documentation searched other than minimum documentation to the extent that such documents are included in the fields searched

Electronic data base consulted during the international search (name of data base and, where practicable, search terms used)

CIBEPAT,EPODOC,WPI,PAJ

**C. DOCUMENTS CONSIDERED TO BE RELEVANT**

| Category* | Citation of document, with indication, where appropriate, of the relevant passages | Relevant to claim No. |
|---|---|---|
| X | V.NEGRO VALDECANTOS, OVIDIO VARELA CARNERO. Diseño de diques rompeolas.Conceptos generales,comportamiento estructural y funcional y proceso constructivo.1ª edición. Madrid:CICCP,2002, ISBN 8438002161,page 266,figure 10.10,page 264,figure 10.9,page 68,figure 4.4.3a. | 1 |
| Y | ES 2013151 A1 (JOSE RAMON MEDINA FOLGADO) 16.04.1990, column 1;column 2,lines 17-23; figure 1. | 1 |
| Y | US 5120156 A (RAUCH HANS G) 09.06.1992, column 4,lines 49-53;figures 1-3. | 1 |
| A | GB 676082 A (ETABLISSEMENTS NEYRPIC) 23.07.1952, figure 2. | 1 |

☐ Further documents are listed in the continuation of Box C.   ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 April 2006 (06.04.2006)** | **10 April 2006 (10.04.2006) 10** |

| Name and mailing address of the ISA/ | Authorized officer |
|---|---|
| | |
| Facsimile No. | Telephone No. |

Form PCT/ISA/210 (second sheet) (July 1992)

## INTERNATIONAL SEARCH REPORT

| International application No. |
| --- |
| PCT/ ES 2005/070169 |

**Box I    Observations where certain claims were found unsearchable (Continuation of item 1 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II    Observations where unity of invention is lacking (Continuation of item 2 of first sheet)**

This International Searching Authority found multiple inventions in this international application, as follows:

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**       ☐ The additional search fees were accompanied by the applicant's protest.
                ☐ No protest accompanied the payment of additional search fees.

Form PCT/ISA/210 (continuation of first sheet (1)) (July 1992)

**INTERNATIONAL SEARCH REPORT**
Information on patent family members

| International Application No |
| --- |
| PCT/ ES 2005/070169 |

| Patent document cited in search report | Publication date | Patent familiy member(s) | Publication date |
| --- | --- | --- | --- |
| ES 2013151 A | 16.04.1990 | EP 0394175 A | 24.10.1990 |
| | | EP 19900500030 | 27.03.1990 |
| | | PT 93678 A | 31.10.1991 |
| | | US 5108223 A | 28.04.1992 |
| | | DE 69005181 D | 27.01.1994 |
| US 5120156 A | 09.06.1992 | US 5246307 A | 21.09.1993 |
| | | | 21.09.1993 |
| | | | 21.09.1993 |
| GB676082A A | 23.07.1952 | **none** | ------------ |

Form PCT/ISA/210 (patent family annex) (July 1992)